# EUROPEAN PATENT APPLICATION

(11) **EP 3 127 650 A1**
(43) Date of publication of application: **08.02.2017**
(21) Application number: 14888123.8
(22) Date of filing: 12.12.2014
(51) Int. Cl.: B23K 26/10, B23K 37/04, H05K 3/00

(54) **LASER PROCESSING MACHINE AND LASER PROCESSING METHOD**

(30) Priority: 01.04.2014 JP 2014075133
(71) Applicant: Panasonic Intellectual Property Management Co., Ltd., Osaka-shi, Osaka 540-6207 (JP)
(72) Inventor: NISHIHARA, Manabu, Osaka-shi, Osaka 540-6207 (JP); MURAKOSHI, Toshiichi, Osaka-shi, Osaka 540-6207 (JP); SASAKI, Yoshinori, Osaka-shi, Osaka 540-6207 (JP)
(74) Representative: Vigand, Philippe
(86) International application number: PCT/JP2014/006191
(87) International publication number: WO 2015/151141

(57) **Abstract**

In conventional machines and methods for laser processing, while the workpiece is being removed from the processing table, the porous sheet interposed between them tends to be torn or displaced. The laser processing machine of the present disclosure includes a processing table having a plurality of first through-holes and a plurality of second through-holes; a first passage; a second passage; a first pump; a second pump, and laser irradiation means. The second through-holes are independent of the first through-holes. The first passage is connected to the first through-holes. The second passage is independent of the first passage and is connected to the second through-holes. The first pump is connected to the first passage and has a sucking function. The second pump is connected to the second passage and has an exhaust function.

## Description

### TECHNICAL FIELD

The present disclosure relates to a machine and method for laser processing, which are especially used to stick a workpiece to a processing table with a porous sheet interposed between them.

### BACKGROUND ART

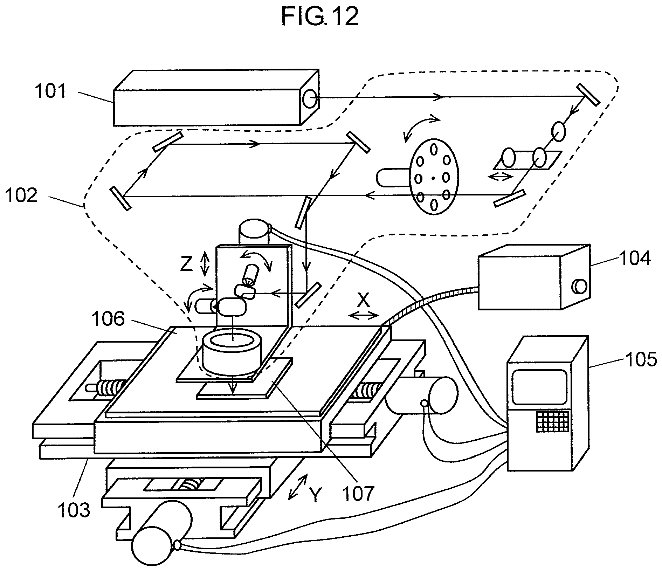

A conventional machine and method for laser processing will be described with reference to FIG. 12.

As shown in FIG. 12, the conventional machine for laser processing includes the following: carbon dioxide gas laser oscillator 101, external optical system 102, processing table 103, vacuum pump 104, automatic control device 105, porous plate 106, and substrate 107.

The conventional method for laser processing is as follows. Substrate 107 is exposed to and processed by laser light emitted from carbon dioxide gas laser oscillator 101 through external optical system 102. While being processed, substrate 107 is placed on table 103 with porous plate 106 interposed between them, and table 103 and external optical system 102 are driven by automatic control device 105 in the directions of the x, y, and z axes. Table 103 is drawn in by vacuum pump 104, and hence, substrate 107 is stuck to table 103 with porous plate 106 interposed between them.

### Citation List

### Patent Literature

PTL 1: Japanese Patent No. 4046913

### SUMMARY OF THE INVENTION

The conventional machine and method for laser processing, however, have the following matter. While substrate 107 is being removed from table 103, porous plate 106 interposed between them tends to be torn or displaced. If torn or displaced, porous plate 106 needs to be restored to the original state before next substrate 107 is placed on porous plate 106, reducing the working efficiency.

To solve the above problem, the present disclosure provides a laser processing machine including: a processing table having a plurality of first through-holes and a plurality of second through-holes; a first passage; a second passage; a first pump; a second pump, and laser irradiation means. The second through-holes are independent of the first through-holes. The first passage is connected to the first through-holes. The second passage is independent of the first passage and connected to the second through-holes. The first pump is connected to the first passage and has a sucking function. The second pump is connected to the second passage and has an exhaust function. The laser irradiation means is located above the processing table and emits laser light.

In addition, the present disclosure provides a laser processing method including: a first placing step, a second placing step, a laser processing process, a first removing step, and a second removing step. In the first placing step, a porous sheet is placed on a processing table having a plurality of first through-holes and a plurality of second through-holes independent of the first through-holes. In the second placing step, a workpiece is placed on the porous sheet. In the laser processing process, the workpiece is laser processed by sucking air through the first through-holes. In the first removing step, the workpiece is removed from the porous sheet. In the first removing step, air is sucked through the first through-holes and is exhausted through the second through-holes.

In the machine and method for laser processing according to the present disclosure, it never occurs that the porous sheet interposed between the processing table and the workpiece is torn or displaced while the workpiece is being removed from the table. This eliminates the need to restore the porous sheet to the original state before the next workpiece is placed on the porous sheet, thereby improving the working efficiency.

### BRIEF DESCRIPTION OF DRAWINGS

FIG. 1 is a perspective view of a laser processing machine according to an exemplary embodiment.
FIG. 2 is a top view of the laser processing machine according to the exemplary embodiment.
FIG. 3A is a sectional view showing a process of a laser processing method according to the exemplary embodiment.
FIG. 3B is a sectional view showing a process of the laser processing method according to the exemplary embodiment.
FIG. 3C is a sectional view showing a process of the laser processing method according to the exemplary embodiment.
FIG. 4A is a sectional view showing a process of the laser processing method according to the exemplary embodiment.
FIG. 4B is a sectional view showing a process of the laser processing method according to the exemplary embodiment.
FIG. 5 is a schematic diagram showing effects of the laser processing method according to the exemplary embodiment.
FIG. 6 is a flowchart of the laser processing method according to the exemplary embodiment.
FIG. 7 is a schematic diagram showing effects of the laser processing method according to the exemplary embodiment.
FIG. 8A is a schematic diagram showing effects of the laser processing method according to the exemplary embodiment.
FIG. 8B is a schematic diagram showing effects of the laser processing method according to the exemplary embodiment.
FIG. 8C is a schematic diagram showing effects of the laser processing method according to the exemplary embodiment.
FIG. 9 is a top view of another laser processing machine according to the exemplary embodiment.
FIG. 10A is a top view of still another laser processing machine according to the exemplary embodiment.
FIG. 10B is a top view of still another laser processing machine according to the exemplary embodiment.
FIG. 11A is a top view of still another laser processing machine according to the exemplary embodiment.
FIG. 11B is a top view of still another laser processing machine according to the exemplary embodiment.
FIG. 12 is a schematic view of a conventional laser processing machine.

### DESCRIPTION OF EMBODIMENTS

Embodiments of the present invention will be described with reference to drawings.

### EXEMPLARY EMBODIMENT

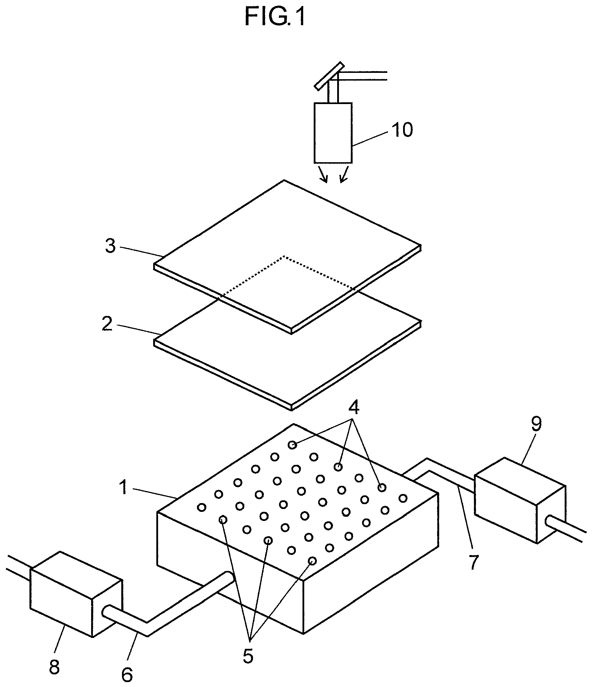

First, a machine and method for laser processing according to the present exemplary embodiment will be described with reference to FIGS. 1 to 6.

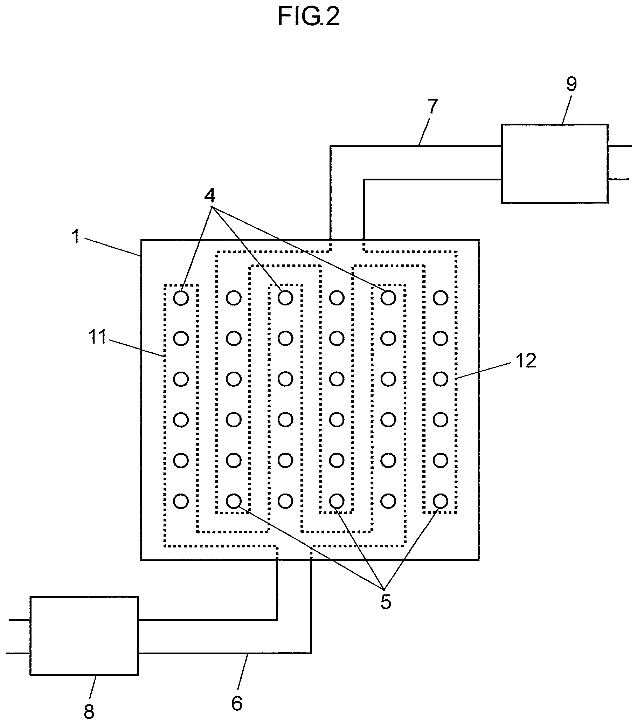

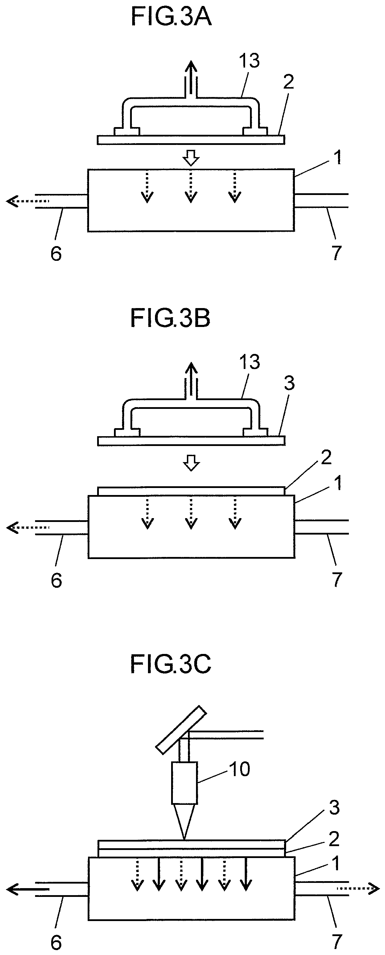

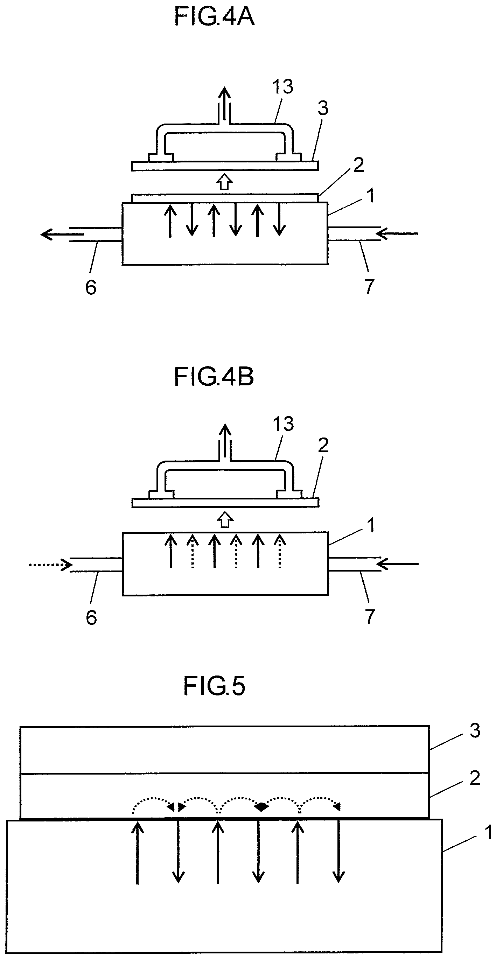

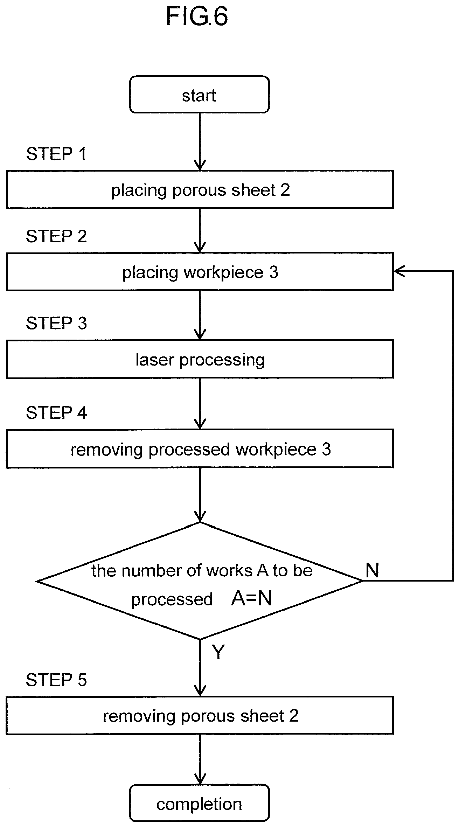

FIG. 1 is a perspective view of the laser processing machine according to the present exemplary embodiment. FIG. 2 is a top view of this machine. FIGS. 3A to 4B are sectional views showing processes of the laser processing method according to the present exemplary embodiment. FIG. 5 is a schematic diagram showing effects of this method. FIG. 6 is a flowchart of this method.

As shown in FIG. 1, the laser processing machine according to the present exemplary embodiment includes the following: processing table 1, through-holes 4 (first through-holes), through-holes 5 (second through-holes), pipe 6 (part of a first passage), pipe 7 (part of a second passage), pump 8 (first pump), pump 9 (second pump), and laser head 10 (laser irradiation means). In laser processing, porous sheet 2 and workpiece 3 are placed in that order on processing table 1. Pump 8 at least has a sucking function and may further have an exhaust function. Pump 9 at least has an exhaust function and may further have a sucking function. Laser head 10 collects incident laser light with an fθ lens and irradiates workpiece 3 with this light.

In the present exemplary embodiment, the term "suck" means that air is drawn into processing table 1 from outside through the through-holes, whereas the term "exhaust" means that air is drawn out of table 1 through the through-holes. In other words, "suck" means for pumps 8 and 9 to draw air out of table 1, whereas "exhaust" means for pumps 8 and 9 to draw air into table 1.

As shown in FIG. 2, processing table 1 further includes gas passages 11 (part of the first passage) and gas passages 12 (part of the second passage). Gas passages 11 are tubular and connect through-holes 4 and pipe 6. Gas passages 12 are tubular and connect through-holes 5 and pipe 7. Through-holes 4 and 5 are arranged in a matrix. Gas passages 11 and 12 extend in the column direction (the vertical direction in FIG. 2 or a first direction) and are alternately connected in the row direction of the through-holes (the horizontal direction in FIG. 2 or a second direction). In other words, the columns composed of through-holes 4 (first columns) and the columns composed of through-holes 5 (second columns) are alternately arranged. More specifically, gas passages 11 and 12 are each comb-shaped and face each other so as to be arranged alternately.

The laser processing method according to the present exemplary embodiment will be described with reference to FIGS. 3A to 6.

As shown in FIG. 3A and Step 1 of FIG. 6, porous sheet 2 is carried while being stuck to vacuum pad 13, and is placed on processing table 1 (first placing step). In this case, it is preferable that pump 8 (not shown) should be operated to draw in air from processing table 1 via pipe 6 and gas passages 11 so that air can be drawn into table 1 through through-holes 4. Pipe 6 and gas passages 11 are collectively referred to as the first passage. As a result, porous sheet 2 is stuck more firmly to table 1 and is settled more stably on it. It is not always necessary to draw in air through through-holes 4 using pump 8; porous sheet 2 can be placed by its own weight on table 1.

Next, as shown in FIG. 3B and Step 2 of FIG. 6, workpiece 3 is carried while being stuck to vacuum pad 13, and is placed on porous sheet 2 (second placing step). In this case, it is preferable that pump 8 (not shown) should be operated to draw in air from processing table 1 via pipe 6 and gas passages 11 so that air can be drawn into table 1 through through-holes 4. As a result, workpiece 3 is stuck more firmly to table 1 via porous sheet 2 and is settled more stably on porous sheet 2. It is not always necessary to draw in air through through-holes 4 using pump 8; workpiece 3 can be placed by its own weight on porous sheet 2.

Next, as shown in FIG. 3C and Step 3 of FIG. 6, workpiece 3 is subjected to laser irradiation from laser head 10 located over table 1 (laser processing process). In this case, pump 8 (not shown) is operated to draw in air from table 1 via pipe 6 and gas passages 11 so that air can be drawn into table 1 through through-holes 4. As a result, workpiece 3 is stuck and settled more stably on table 1 via porous sheet 2, and hence, is processed more accurately. In this case, it is preferable that pump 9 (not shown) should be operated to draw in air from table 1 via pipe 7 and gas passages 12 so that air can be drawn into table 1 also through through-holes 5. Pipe 7 and gas passages 12 are collectively referred to as the second passage. It is not always necessary to draw in air through through-holes 5 using pump 9.

Next, as shown in FIG. 4A and Step 4 of FIG. 6, processed workpiece 3 is removed from porous sheet 2 using vacuum pad 13 (first removing step). In this case, pump 8 (not shown) is operated to draw in air from table 1 via pipe 6 and gas passages 11 so that air can be drawn into table 1 through through-holes 4. At the same time, pump 9 (not shown) is operated to draw air out of table 1 via pipe 7 and gas passages 12 so that air can be drawn out of table 1 through through-holes 5.

This process will be described more specifically with reference to FIG. 5.

As shown in FIG. 5, when workpiece 3 is removed from porous sheet 2, air is drawn into table 1 through through-holes 4 and at the same time, is drawn out of table 1 through through-holes 5. In this case, inside porous sheet 2, air flows through through-holes 4 into through-holes 5 as shown by the dotted arrows in FIG. 5. As a result, workpiece 3 is stuck less firmly to table 1, whereas porous sheet 2 is stuck as firmly as ever. This allows workpiece 3 to be removed while porous sheet 2 is kept on table 1.

Steps 2-4 complete the processing of workpiece 3. In the case of processing next workpiece 3 without replacing porous sheet 2, Steps 2-4 are performed again. In other words, as shown in FIG. 6, if the number of works 3 to be processed has not yet reached the predetermined number N, the process returns to Step 2. By repeating Steps 2-4, a plurality of works 3 are processed using one porous sheet 2. When the number of works 3 to be processed reaches the number N, Step 4 is followed by Step 5 shown in FIG. 6, and porous sheet 2 is replaced with a new one. The number N of works 3 to be processed is determined by the degree of degradation of porous sheet 2 and other conditions.

Finally, as shown in FIG. 4B and Step 5 of FIG. 6, degraded porous sheet 2 is removed from table 1 using vacuum pad 13 (second removing step). In this case, pump 9 (not shown) is operated to draw air out of table 1 via pipe 7 and gas passages 12 so that air can be drawn out of table 1 through through-holes 5. In this case, it is preferable that pump 8 (not shown) should be operated to draw air out of table 1 via pipe 6 and gas passages 11 so that air can be drawn out of table 1 also through through-holes 4. It is not always necessary to draw air out through through-holes 4 using pump 8. Next, new porous sheet 2 can be placed on table 1 in the way shown in FIG. 3A, and laser processing can be performed again.

As described above, the processes in Steps 1-5 complete the processing of a plurality of works 3 using one porous sheet 2. As shown in FIGS. 4A and 5, porous sheet 2 interposed between table 1 and workpiece 3 is never torn or displaced while workpiece 3 is being removed from table 1. This eliminates the need to restore porous sheet 2 to the original state before the next workpiece 3 is placed on porous sheet 2, thereby improving the working efficiency.

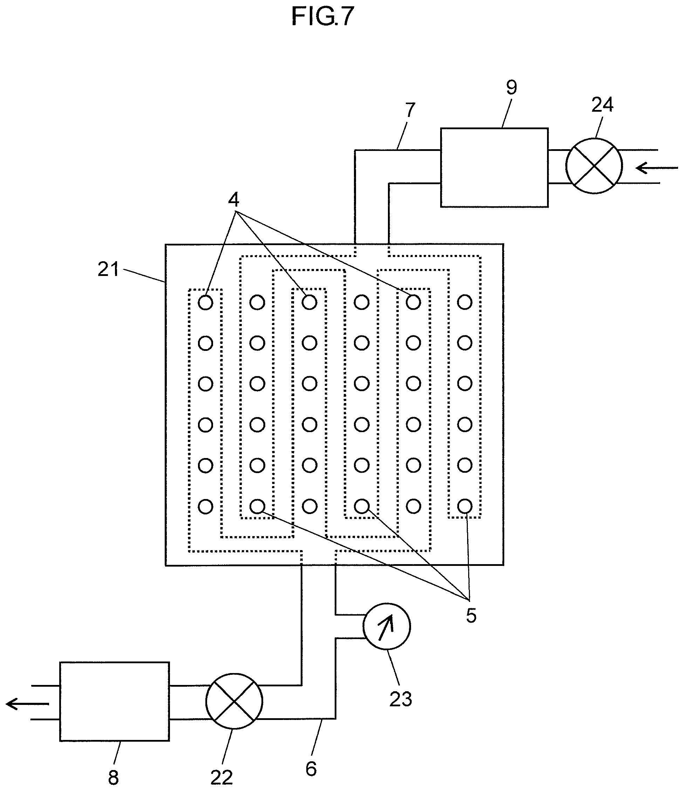

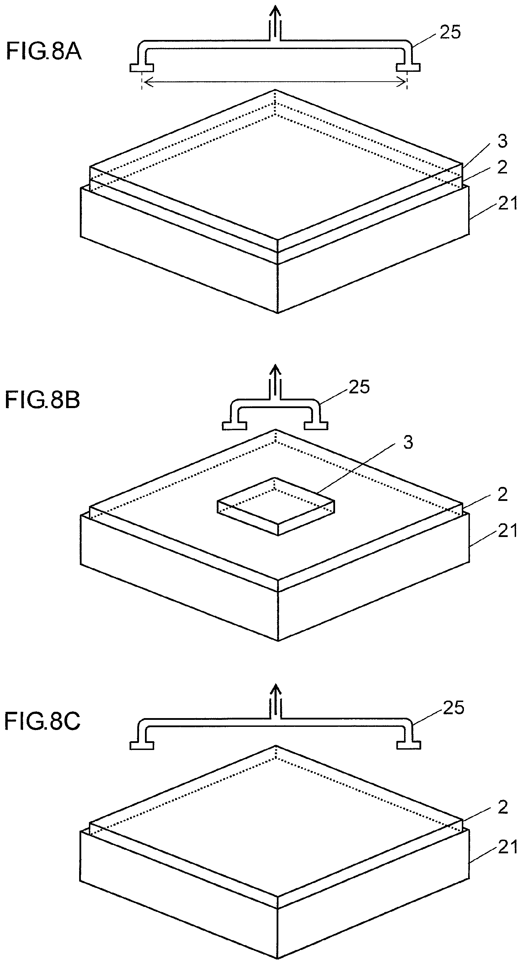

Next, the process of removing workpiece 3 shown in FIGS. 4A and 5, and the process of removing porous sheet 2 shown in FIG. 4B will be described more specifically with reference to FIGS. 7 and 8A-8C. The same components as shown in FIGS. 1 to 6 are denoted by the same reference numerals and the description thereof will be omitted.

As shown in FIG. 7, pipe 6 connected to processing table 21 is provided with valve 22 and pressure meter 23. In addition, pump 9 is provided with valve 24 (on the side opposite to pipe 7). Workpiece 3 and porous sheet 2 are carried to table 1 shown in FIG. 7 using vacuum pad 25 under different conditions as shown in FIGS. 8A-8C.

FIG. 8A shows State A, in which table 21 has a size of 200 mm × 200 mm, and porous sheet 2 and workpiece 3, each having substantially the same size as table 21, are placed on table 21. Tables 1-5 include the vacuum pressure V (kPa) measured by pressure meter 23 and the condition of workpiece 3 carried using vacuum pad 25 in State A when the blow amount D (L/min) of pump 9 is changed as shown in the left-end column of Tables 1-5. Vacuum pad 25 has suction parts at both ends at an interval of 212.1 mm, which are placed in diagonal positions of workpiece 3.

FIG. 8B shows State B, which is the same as State A except that workpiece 3 has a size of 97 mm × 97 mm, and the suction parts at both ends of pad 25 are at an interval of 106.1 mm. Tables 1-5 include the vacuum pressure V and the condition of workpiece 3 carried using vacuum pad 25 in State B when the blow amount D of pump 9 is changed as shown in the left-end column of Tables 1-5.

FIG. 8C shows State C, which is the same as State A except that workpiece 3 is absent. Tables 1-5 include the vacuum pressure V in State C when the blow amount D of pump 9 is changed as shown in the left-end column of Tables 1-5. The observed results indicate that porous sheet 2 cannot be stably held on processing table 21 when the vacuum pressure V is -1.0 kPa or more, as shown with an asterisk (*) sign in Tables 1-5.

The following is a description of Tables 1-5. The left-end column of each of Tables 1-5 shows the blow amount D (L/min) of pump 9, which is changed by controlling valve 24. The center of each table shows the vacuum pressure V (kPa) measured by pressure meter 23 in States A to C. The right column of each table shows the condition of carried workpiece 3 in States A and B.

The condition of carried workpiece 3 shown in the right column of each of Tables 1-5 will be described as follows. The symbol Δ indicates that workpiece 3 is not able to be properly detached from porous sheet 2. The symbol ○ indicates that workpiece 3 is smoothly removed from porous sheet 2. The box with a slash indicates that the vacuum pressure V is -1.0 kPa or more, and porous sheet 2 is unstable as shown with an asterisk (*) sign in Tables 1-5.

In Table 1, pump 8 is operated in such a manner that when the blow amount D is 0 L/min, the vacuum pressure V is -10 kPa in State A. Table 1 shows the vacuum pressure V in States A to C and the condition of carried workpiece 3 in States A and B when the blow amount D is changed in the range of 0 to 24 L/min in States A to C.

**[Table 1]**

| Blow amount D (L/min) | Vacuum pressure V (kPa) | | | Condition of carried workpiece | |
|---|---|---|---|---|---|
| | State | | | State | |
| | A | B | C | A | B |
| 0 | -10.0 | -1.8 | -1.4 | Δ | ○ |
| 5 | -7.6 | -1.7 | -1.3 | ○ | ○ |
| 10 | -6.9 | -1.6 | -1.3 | ○ | ○ |
| 15 | -5.5 | -1.5 | -1.2 | ○ | ○ |
| 16 | -5.2 | -1.4 | -1.2 | ○ | ○ |
| 17 | -4.9 | -1.4 | -1.2 | ○ | ○ |
| 18 | -4.6 | -1.3 | -1.1 | ○ | ○ |
| 19 | -4.2 | -1.3 | -1.0 * | ○ | ○ |
| 20 | -3.9 | -1.2 | -1.0 * | ○ | ○ |
| 21 | -3.6 | -1.1 | -0.9 * | ○ | ○ |
| 22 | -3.3 | -1.1 | -0.9 * | ○ | ○ |
| 23 | -3.1 | -1.0 | -0.8 * | ○ | |
| 24 | -2.8 | -1.0 * | -0.8 * | ○ | |

In Table 2, pump 8 is operated in such a manner that when the blow amount D is 0 L/min, the vacuum pressure V is -11 kPa in State A. Table 2 shows the vacuum pressure V in States A to C and the condition of carried workpiece 3 in States A and B when the blow amount D is changed in the range of 0 to 30 L/min in States A to C.

**[Table 2]**

| Blow amount D (L/min) | Vacuum pressure V (kPa) | | | Condition of carried workpiece | |
|---|---|---|---|---|---|
| | State | | | State | |
| | A | B | C | A | B |
| 0 | -11.0 | -1.8 | -1.6 | Δ | ○ |
| 5 | -8.2 | -1.7 | -1.4 | ○ | ○ |
| 10 | -7.6 | -1.6 | -1.4 | ○ | ○ |
| 15 | -6.5 | -1.5 | -1.3 | ○ | ○ |
| 20 | -4.5 | -1.3 | -1.3 | ○ | ○ |
| 22 | -4.0 | -1.2 | -1.1 | ○ | ○ |
| 24 | -3.4 | -1.2 | -0.9* | ○ | ○ |
| 26 | -3.0 | -1.1 | -0.7* | ○ | ○ |
| 28 | -2.2 | -1.0* | -0.6* | ○ | |
| 30 | -1.4 | -0.7* | -0.5* | ○ | |

In Table 3, pump 8 is operated in such a manner that when the blow amount D is 0 L/min, the vacuum pressure V is -12 kPa in State A. Table 3 shows the vacuum pressure V in States A to C and the condition of carried workpiece 3 in States A and B when the blow amount D is changed in the range of 0 to 30 L/min in States A to C.

**[Table 3]**

| Blow amount D (L/min) | Vacuum pressure V (kPa) | | | Condition of carried workpiece | |
|---|---|---|---|---|---|
| | State | | | State | |
| | A | B | C | A | B |
| 0 | -12.0 | -2.1 | -1.9 | Δ | ○ |
| 5 | -9.8 | -2.1 | -1.8 | Δ | ○ |
| 10 | -9.0 | -2.0 | -1.8 | ○ | ○ |
| 15 | -7.5 | -1.9 | -1.7 | ○ | ○ |
| 20 | -5.4 | -1.7 | -1.5 | ○ | ○ |
| 22 | -4.7 | -1.6 | -1.4 | ○ | ○ |
| 24 | -4.5 | -1.5 | -1.3 | ○ | ○ |
| 26 | -4.0 | -1.4 | -1.2 | ○ | ○ |
| 28 | -3.5 | -1.4 | -1.1 | ○ | ○ |
| 30 | -2.9 | -1.3 | -1.0* | ○ | ○ |

In Table 4, pump 8 is operated in such a manner that when the blow amount D is 0 L/min, the vacuum pressure V is -13 kPa in State A. Table 4 shows the vacuum pressure V in States A to C and the condition of carried workpiece 3 in States A and B when the blow amount D is changed in the range of 0 to 35 L/min in States A to C.

**[Table 4]**

| Blow amount D (L/min) | Vacuum pressure V (kPa) | | | Condition of carried workpiece | |
|---|---|---|---|---|---|
| | State | | | State | |
| | A | B | C | A | B |
| 0 | -13.0 | -2.3 | -2.0 | Δ | ○ |
| 5 | -10.4 | -2.1 | -1.8 | Δ | ○ |
| 10 | -9.5 | -2.1 | -1.8 | ○ | ○ |
| 15 | -8.3 | -2.0 | -1.7 | ○ | ○ |
| 20 | -6.4 | -1.7 | -1.5 | ○ | ○ |
| 25 | -5.1 | -1.5 | -1.3 | ○ | ○ |
| 30 | -3.5 | -1.3 | -1.0 | ○ | ○ |
| 35 | -1.2 | -0.8 | -0.7 | ○ | |

In Table 5, pump 8 is operated in such a manner that when the blow amount D is 0 L/min, the vacuum pressure V is -14 kPa in State A. Table 5 shows the vacuum pressure V in States A to C and the condition of carried workpiece 3 in States A and B when the blow amount D is changed in the range of 0 to 38 L/min in States A to C.

**[Table 5]**

| Blow amount D (L/min) | Vacuum pressure V (kPa) | | | Condition of carried workpiece | |
|---|---|---|---|---|---|
| | State | | | State | |
| | A | B | C | A | B |
| 0 | -14.0 | -2.6 | -2.3 | Δ | Δ |
| 5 | -11.5 | -2.5 | -2.1 | Δ | ○ |
| 10 | -10.7 | -2.4 | -2.1 | Δ | ○ |
| 15 | -8.8 | -2.3 | -2.0 | ○ | ○ |
| 20 | -7.1 | -2.1 | -1.8 | ○ | ○ |
| 22 | -6.4 | -2.0 | -1.7 | ○ | ○ |
| 24 | -6.0 | -1.9 | -1.7 | ○ | ○ |
| 26 | -5.3 | -1.8 | -1.6 | ○ | ○ |
| 28 | -4.9 | -1.7 | -1.5 | ○ | ○ |
| 30 | -4.2 | -1.6 | -1.4 | ○ | ○ |
| 32 | -3.5 | -1.5 | -1.2 | ○ | ○ |
| 34 | -2.7 | -1.3 | -1.0* | ○ | ○ |
| 36 | -1.8 | -1.0* | -0.9* | ○ | |
| 38 | -1.0* | -0.8* | -0.8* | | |

From the above results concerning State A, it is understood that when the vacuum pressure V is -9.5 kPa or less, the condition of carried workpiece 3 is Δ (most evident in Table 4), and when the vacuum pressure V is -9.0 kPa or more, the condition of carried workpiece 3 is ○ (most evident in Table 3). As a result, in State A, the vacuum pressure V is preferably not less than -9.0 kPa and less than -1.0 kPa. Similarly, it is understood that in State B, when the vacuum pressure V is -2.6 kPa or less, the condition of carried workpiece 3 is Δ (most evident in Table 5), and when the vacuum pressure V is -2.5 kPa or more, the condition of carried workpiece 3 is ○ (most evident in Table 5). As a result, in State B, the vacuum pressure V is preferably not less than -2.5 kPa and less than -1.0 kPa. Hence, it is preferable that valves 22 and 24 of pumps 8 and 9, respectively, should be controlled to put the vacuum pressure V in this range.

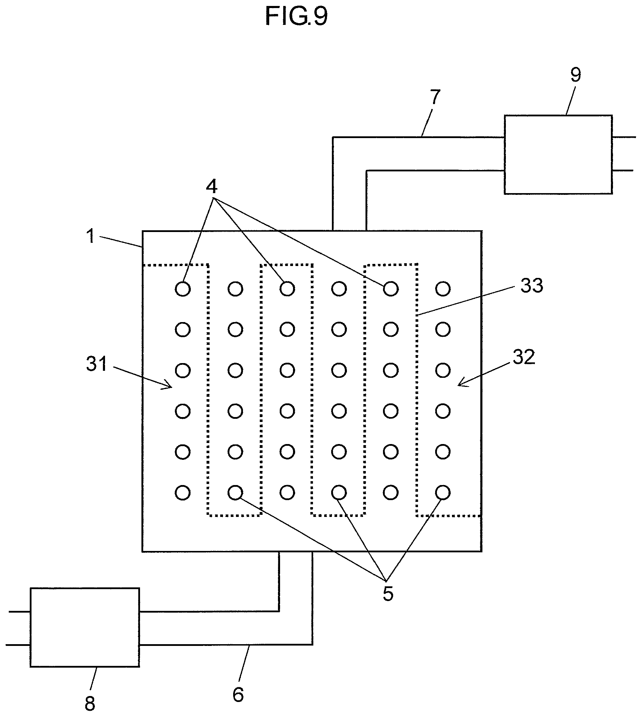

In FIG. 2, gas passages 11 connecting through-holes 4 and pipe 6 have a tubular structure, and gas passages 12 connecting through-holes 5 and pipe 7 also have a tubular structure in processing table 1. Alternatively, as shown in FIG. 9, it is possible to form gas passage 31 (first passage) and gas passage 32 (second passage) by providing separation barrier 33 which separates through-holes 4 and through-holes 5.

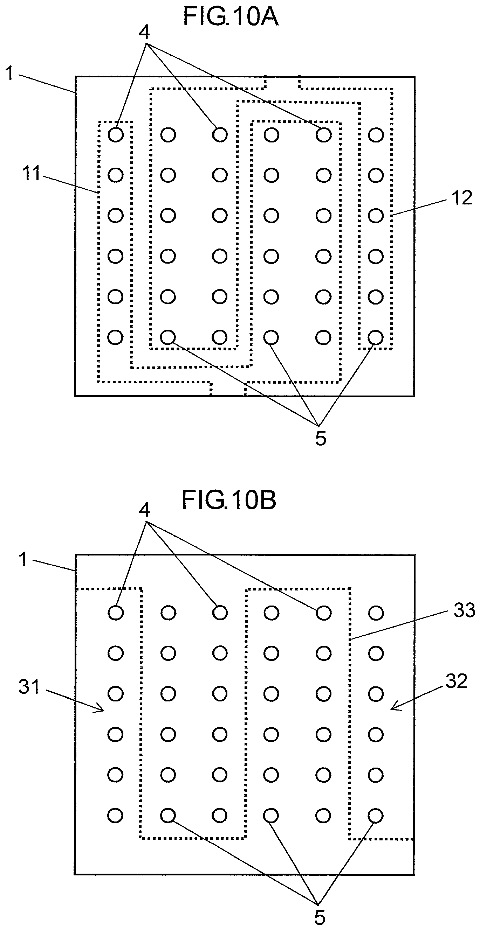

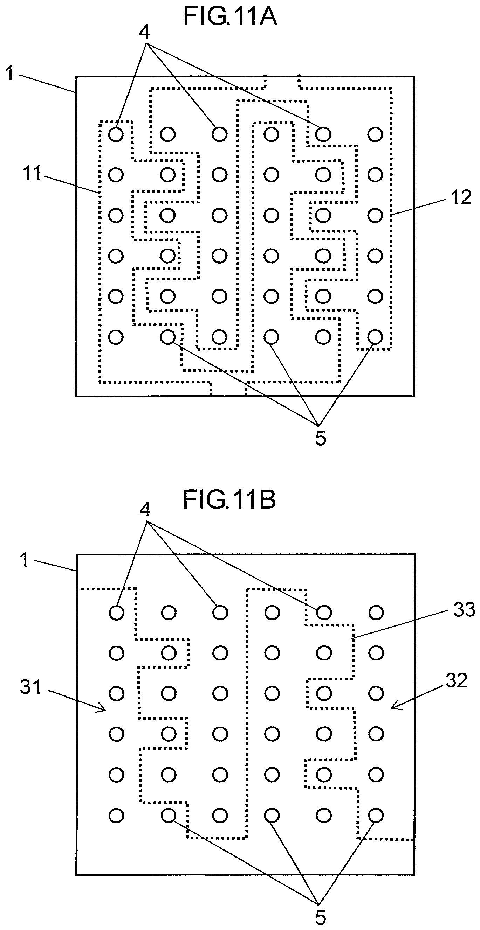

Through-holes 4 and 5 need not necessarily be arranged alternately column by column. They only need to be dispersed to some extent in the entire processing table 1. For example, as shown in FIG. 10A, through-holes 4 and 5 may be partly arranged in two columns and connected to gas passages 11 and 12, respectively. In this case, as shown in FIG. 10B, separation barrier 33 can be provided to separate through-holes 4 and 5, thereby forming gas passage 31 (the first passage) and gas passage 32 (the second passage). Further alternatively, as shown in FIG. 11A, through-holes 4 and 5 may be arranged in alternate columns, in which some of through-holes 4 and 5 may be arranged in alternate columns. These through-holes 4 and 5 may be connected to gas passages 11 and 12, respectively. In this case, too, as shown in FIG. 11B, separation barrier 33 can be provided to separate through-holes 4 and 5, thereby forming gas passage 31 (the first passage) and gas passage 32 (the second passage).

Thus, besides the structure shown in FIGS. 2 and 9, through-holes 4 and 5 need only to be arranged dispersed to some extent in processing table 1 as shown in FIGS. 10A to 11B. In other words, at least one of through-holes 5 needs to be arranged adjacent to any of through-holes 4. It is also preferable that at least one of through-holes 4 should be arranged adjacent to any of through-holes 5.

### INDUSTRIAL APPLICABILITY

The machine and method for laser processing according to the present disclosure are useful in laser processing, such as cutting, piercing, or welding. This is because it never occurs that the porous sheet interposed between the processing table and the workpiece is torn or displaced while the workpiece is being removed from the processing table.

### REFERENCE MARKS IN THE DRAWINGS

- 1, 21: processing table
- 2: porous sheet
- 3: workpiece
- 4, 5: through-hole
- 6, 7: pipe
- 8, 9: pump
- 10: laser head
- 11, 12, 31, 32: gas passage
- 13, 25: vacuum pad
- 22, 24: valve
- 23: pressure meter
- 33: separation barrier
- 101: carbon dioxide gas laser oscillator
- 102: external optical system
- 103: processing table
- 104: vacuum pump
- 105: automatic control device
- 106: porous plate
- 107: substrate

## Claims

1. A laser processing machine comprising:
a processing table having a plurality of first through-holes and a plurality of second through-holes independent of the first through-holes;
a first passage connected to the first through-holes;
a second passage connected to the second through-holes, the second passage being independent of the first passage;
a first pump connected to the first passage and having a sucking function;
a second pump connected to the second passage and having an exhaust function; and
laser irradiation means located above the processing table and emitting laser light.

2. The laser processing machine of claim 1, wherein the second pump further has a sucking function.

3. The laser processing machine of claim 1 or 2, wherein the first pump further has an exhaust function.

4. The laser processing machine of any of claims 1 to 3, wherein the second pump includes a valve for controlling an amount of gas flow, the valve being located opposite to the second passage.

5. The laser processing machine of any of claims 1 to 4, wherein any one of the first through-holes is adjacent to at least one of the second through-holes.

6. The laser processing machine of claim 5, wherein any one of the second through-holes is adjacent to at least one of the first through-holes.

7. The laser processing machine of claim 5 or 6, wherein
the first through-holes are disposed to form a plurality of first columns extending in a first direction on the processing table,
the second through-holes are disposed to form a plurality of second columns extending in the first direction on the processing table, and
the first columns and the second columns are alternately disposed in a second direction orthogonal to the first direction on the processing table.

8. A laser processing method comprising:
a first placing step of placing a porous sheet on a processing table having a plurality of first through-holes and a plurality of second through-holes independent of the first through-holes;
a second placing step of placing a workpiece on the porous sheet;
a laser processing step of laser processing the workpiece by sucking air through the first through-holes; and
a first removing step of removing the workpiece from the porous sheet, wherein air is sucked through the first through-holes and is exhausted through the second through-holes in the first removing step.

9. The laser processing method of claim 8, wherein in the first placing step, air is sucked through the first through-holes.

10. The laser processing method of claim 8 or 9, wherein in the second placing step, air is sucked through the first through-holes.

11. The laser processing method of any of claims 8 to 10, wherein in the laser processing step, air is sucked through the second through-holes.

12. The laser processing method of any of claims 8 to 11, further comprising, after the first removing step, a second removing step of removing the porous sheet from the processing table,
wherein air is exhausted through the second through-holes in the second removing step.

13. The laser processing method of claim 12, wherein in the second removing step, air is exhausted through the first through-holes.
